# EUROPÄISCHE PATENTSCHRIFT

(11) **EP 2 301 322 B1**
(45) Veröffentlichungstag und Bekanntmachung des Hinweises auf die Patenterteilung: **04.01.2017**
(21) Anmeldenummer: 10176335.7
(22) Anmeldetag: 13.09.2010
(51) Int. Cl.: A01D 75/20, A01F 15/07, A01B 59/04

(54) **Kombination aus einem landwirtschaftlichen Gerät und einem Träger- oder Zugfahrzeug mit einem Sensor zur Erfassung einer Gefahrensituation und einer automatischen Abschaltung der Zapfwelle**
Combination of an agricultural device and a carrier or trailer vehicle with a sensor for recording a hazardous situation and an automatic deactivation of the p.t.o. shaft
Combinaison constituée d'un appareil agricole et d'un véhicule porteur ou de traction et dotée d'un capteur destiné à la détection d'une situation de danger et d'un arrêt automatique de la prise de force

(30) Priorität: 25.09.2009 DE 102009045044
(43) Veröffentlichungstag der Anmeldung: 30.03.2011
(73) Patentinhaber: Deere & Company, Moline, IL 61265 (US)
(72) Erfinder: Viaud, Jean, 01190, Reyssouze (FR)
(74) Vertreter: Holst, Sönke

(56) Entgegenhaltungen:
- DE-A1- 19 718 110
- DE-C1- 4 031 590
- US-A- 3 805 497
- US-A- 4 323 136
- US-A1- 2009 107 102

## Beschreibung

Die Erfindung eine Kombination aus einem landwirtschaftlichen Gerät und einem Träger- oder Zugfahrzeug.

### Stand der Technik

Bei landwirtschaftlichen Geräten sind üblicherweise bewegliche Elemente aus Sicherheitsgründen durch Abdeckungen nach außen hin abgedeckt, um den Bediener und andere Personen zu schützen. Da die Innenräume der Geräte aber zu Kontroll- und Wartungszwecken zugänglich sein müssen, sind die Abdeckungen abnehmbar oder verschwenkbar am Gerät angebracht. Um Unfälle zu verhindern, sind die Abdeckungen in der Regel nur mittels geeigneter Werkzeuge zu öffnen, was den Nachteil hat, dass sie ohne das geeignete Werkzeug nicht geöffnet werden können. Stehen diese gerade nicht zur Verfügung, sind Arbeiten am Gerät nicht möglich. Es wurde vorgeschlagen, den Verbrennungsmotor einer selbstfahrenden landwirtschaftlichen Arbeitsmaschine selbsttätig anzuhalten, wenn ein Sensor erfasst, dass eine Abdeckung der Arbeitsmaschine geöffnet wurde (DE 43 09 668 A). Eine Anordnung zur Erkennung einer geöffneten Abdeckung einer Ballenpresse, die ggf. zum Abschalten der Zapfwelle des Traktors führt, ist in der nachveröffentlichten DE 10 2008 018 541 A1 beschrieben.

Als nachteilig ist bei den Abdeckungen anzusehen, dass sie für den Betrieb des vom Traktor betriebenen Geräts grundsätzlich unnötig sind, sondern nur das Gewicht und die Herstellungskosten vergrößern. In vielen Fällen werden sie von den Bedienern demontiert, um Arbeiten am Gerät zu erleichtern. Außerdem ist trotz der Abdeckungen kein 100%-iger Schutz des Bedieners möglich, da beispielsweise die Öffnungen, durch die das Gerät Erntegut aufnimmt (im Falle einer Ballenpresse der Gutaufnehmer und der stromab davon angeordnete Rotor) nicht abgedeckt werden können, weil anderenfalls keine Erntegutzufuhr möglich wäre. Gerade in diesem Bereich ergeben sich jedoch gelegentlich Verstopfungen. Oftmals versuchen Bediener bei laufendem Gerät, diese Verstopfungen zu beseitigen und begeben sich in große Gefahr.

In der GB 2 206 662 A wird eine Ballenpresse mit einer Notstoppeinrichtung beschrieben, die aktiv durch den Bediener betätigt werden kann, falls er bei Arbeiten an der Ballenpresse, beispielsweise beim Beseitigen einer Verstopfung, in eine Gefahrensituation geraten ist. Diese Notstoppeinrichtung kann dennoch Verletzungen des Bedieners nicht verhindern.

Es wurde weiterhin vorgeschlagen, an einem selbstfahrenden Ballenwickler einen Infrarotsensor zur Wärmeerkennung von Lebewesen, Motoren etc. anzubringen, der zur Abschaltung des Ballenwicklers führt (DE 196 08 014 A1). Analog wurde bei einem unbemannten Mähdrescher vorgeschlagen, in einem Gefahrenbereich einen Sensor anzubringen, der Lebewesen nachweist und den Mähdrescher ggf. anhält (DE 102 44 822 A1). Die nachveröffentlichte EP 2 106 688 A1 beschreibt einen hinter einem Traktor hergezogenen Ballenwickler, dessen Wickelgeschwindigkeit vermindert wird, wenn ein Sensor ein Hindernis in der unmittelbaren Nachbarschaft des Ballenwicklers erfasst.

In der DE 197 18 110 A1 wird ein Traktor mit einer Heuwerbungsmaschine beschrieben, deren rückwärtige, nicht durch Abdeckungen geschützte Bereiche durch einen Sensor überwacht werden. Entdeckt der Sensor ein Lebewesen in seinem Überwachungsbereich, wird ein Warnsignal abgegeben und ein zur Abschaltung der Maschine führendes Abschaltsignal an eine Schaltkupplung im Antriebsstrang der Maschine gegeben.

Die EP 1 813 146 A2 beschreibt eine Kombination aus einem Traktor und einer Ballenpresse, die jeweils mit einer elektronischen Steuereinheit ausgestattet sind. Die Steuereinheiten kommunizieren miteinander über einen Bus, sodass die Steuereinheit der Ballenpresse die Steuereinheit des Traktors instruieren kann, den Traktor zwecks Umwickelns und Auswurfs eines Ballens anzuhalten. Vor der Aufnahme eines Pressvorgangs veranlasst die Steuerung der Ballenpresse, dass die Zapfwelle des Traktors in Drehung verbracht wird.

Eine ähnliche Kombination beschreibt die als gattungsbildend angesehene US 2009/0107102 A1. Dort wird nach dem Ende eines Wickelvorgangs zunächst geprüft, ob ein Sensor rückwärtig der Tür der Ballenpresse ein Hindernis feststellt. Ist das nicht der Fall, wird die Tür zum Auswerfen des Ballens geöffnet, der Ballen ausgeworfen, die Tür der Ballenpresse geschlossen und die Zapfwelle des Traktors wieder in Drehung versetzt. Falls der Sensor hingegen ein Hindernis feststellt, wird die Tür nicht geöffnet. Hier wird zwar verhindert, dass jemand durch die sich öffnende Tür verletzt wird, jedoch sind weiterhin allseits Abdeckungen an der Ballenpresse vorgesehen, die einen Eingriff in bewegte Teile der Ballenpresse verhindern.

### Aufgabe

Das der Erfindung zugrunde liegende Problem wird darin gesehen, eine Kombination aus einem landwirtschaftlichen Gerät und einem Träger- oder Zugfahrzeug bereitzustellen, bei der ohne großen Aufwand Unfälle verhindert oder zumindest unwahrscheinlicher werden.

### Lösung

Dieses Problem wird erfindungsgemäß durch die Lehre des Patentanspruchs 1 gelöst, wobei in dem weiteren Patentanspruch Merkmale aufgeführt sind, die die Lösung in vorteilhafter Weise weiterentwickeln.

Eine Kombination setzt sich aus einem landwirtschaftlichen Gerät und einem Träger- oder Zugfahrzeug zusammen, von dem das Gerät getragen, gezogen oder anderweitig über ein Feld bewegt werden kann. Das Träger- oder Zugfahrzeug umfasst eine elektronische Steuereinheit, die mit einem Aktor in Verbindung steht, mit dem eine Kupplung für eine Zapfwelle ein- und ausgeschaltet werden kann. Das Gerät weist wiederum antreibbare Elemente auf, die von der Zapfwelle antreibbar sind. Außerdem umfasst das Gerät eine ihm zugeordnete elektronische Steuereinheit, die mit einem Sensor in Verbindung steht, der erfasst, ob sich eine Person oder ein anderes Lebewesen oder Hindernis innerhalb eines Gefahrenbereichs des Geräts befindet. Dabei handelt es sich in der Regel um einen vorbestimmten, dem Gerät benachbarten Bereich. Die beiden Steuereinheiten kommunizieren über eine Busverbindung miteinander, sei es drahtgebunden, über einen Lichtwellenleiter oder drahtlos, z. B. durch Radio- oder Lichtwellen. Die Busverbindung kann insbesondere gemäß der Norm ISO 11783 ausgestaltet sein. Falls der Sensor der elektronischen Steuereinheit des Geräts mitteilt, dass sich eine Person oder dgl. innerhalb des überwachten Gefahrenbereichs befindet, übermittelt die elektronische Steuereinheit des Geräts der elektronischen Steuereinheit des Träger- oder Zugfahrzeugs die Anweisung, den Aktor zu veranlassen, die Kupplung der Zapfwelle zu öffnen, um die Gefahr für den Bediener oder andere, sich in der Nähe befindliche Personen oder Tiere zu unterbinden. Ist die Kupplung der Zapfwelle zum Zeitpunkt der Öffnung der Abdeckung noch nicht geschlossen, verhindert die elektronische Steuereinheit des Träger- oder Zugfahrzeugs, dass der Aktor veranlasst wird, die Kupplung zu schließen, auch wenn ein Bediener den Zapfwellenschalter einschaltet. In beiden Fällen wird vorzugsweise dem Bediener ein Warnhinweis gegeben.

Die Größe des sensitiven Bereichs des Sensors hängt von der Geschwindigkeit ab, mit welcher die Kombination sich über ein Feld bewegt. Bei höheren Geschwindigkeiten ist weniger wahrscheinlich, dass sich eine Person oder ein Tier dem Gerät nähert und angetriebene Elemente berührt, als wenn sie relativ langsam fährt oder steht. Daher ist der sensitive Bereich bei kleinen Geschwindigkeiten oder im Stillstand relativ groß gestaltet, um in dieser besonders gefahrenträchtigen Situation Unfälle zu vermeiden, und der sensitive Bereich bei höheren Geschwindigkeiten (z. B. oberhalb von 5 km/h) kleiner gestaltet oder der Sensor dann ganz abgeschaltet. Dadurch vermindert man auch die Wahrscheinlichkeit von Fehlauslösungen des Sensors beispielsweise durch herabhängende Äste, Zäune oder andere Hindernisse.

Da das Anhalten bzw. Verhindern des Anlaufens der Zapfwelle (mit Ausnahme des Sensors) nur auf in der Regel bereits vorhandenen Bausteinen beruht, erreicht man auf diese Weise ohne größeren zusätzlichen Aufwand einen selbsttätigen Stillstand der sich bewegenden Elemente des Geräts, um die Unfallgefahr zu vermeiden, wenn sich eine Person in der Nähe des Geräts befindet. Die Sicherheitsbedingungen können nunmehr auch mit Geräten erfüllt werden, die ganz oder teilweise nicht mit Abdeckungen ausgestattet sind. Außerdem werden Arbeiten am Gerät erleichtert, wenn Abdeckungen entfallen.

Die Erfindung kann an beliebigen landwirtschaftlichen Geräten verwendet werden, die durch eine Zapfwelle angetriebene Elemente aufweisen. Beispiele sind Ballenpressen für runde oder rechteckige Ballen, Ladewagen, Bodenbearbeitungsmaschinen, Mähgeräte und angebaute oder gezogene Feldhäcksler. Bei einer Rundballenpresse können beispielsweise die rückwärtige Tür bzw. anstelle der Tür vorgesehene bewegliche Abdeckungen entfallen. Dann würde der Sensor den rückwärtigen Bereich der Rundballenpresse überwachen. Es wäre auch denkbar, die seitlichen und/oder vorderen Abdeckungen des Geräts, beispielsweise einer Ballenpresse für runde oder rechteckige Ballen, entfallen zu lassen und durch den Sensor auch die Seiten und/oder Vorderseite des Geräts zu überwachen.

Der Sensor kann als Infrarotsensor ausgeführt sein, der Personen und Lebewesen anhand der von ihnen abgestrahlten Infrarotwellen erkennt. Durch eine geeignete Datenverarbeitung kann vermieden werden, dass aus einer Ballenpresse ausgeworfene Ballen, die sich aufgrund der Reibung an den Seitenwänden der Ballenpresse erwärmen, zu Fehlauslösungen führen. Die elektronische Steuereinheit des Geräts oder eine geeignete, dem Sensor zugeordnete Schaltung kann zu diesem Zweck über das Auswerfen des Ballens informiert werden. Ein im zeitlichem Zusammenhang mit dem Auswerfen des Ballens stehendes Ansprechen des Sensors wird dann ignoriert. Zusätzlich oder bei einer anderen Ausführungsform umfasst der Sensor eine zwei- oder dreidimensional arbeitende Kamera und ein Bildverarbeitungssystem.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht einer Kombination aus einem Zugfahrzeug in Form eines Traktors und einem Gerät in Form einer Rundballenpresse während der Bildung eines Ballens und
- Fig. 2: die Kombination aus Figur 1 beim Auswurf eines Ballens.

Die dargestellte Kombination setzt sich aus einem Zugfahrzeug 10 in Form eines Traktors und einem Gerät 12 in Form einer Rundballenpresse zusammen. Das Zugfahrzeug 10 umfasst ein mit einem Rahmen ausgestattetes Fahrgestell 14, das sich über vordere, lenkbare Räder 16 und hintere, antreibbare Räder 18 auf dem Erdboden abstützt. Am Fahrgestell 14 sind eine Kabine 20 mit einem Bedienerarbeitsplatz, an dem ein Sitz (nicht gezeigt) und ein Lenkrad 22 angeordnet sind, und ein Verbrennungsmotor 24 24 befestigt. Die Kurbelwelle des Verbrennungsmotors 24 ist über eine Kupplung 26 mit einem Zapfwellengetriebe 28 verbunden, das wiederum über eine Zapfwelle 32 einen Zapfwellenausgang 30 antreibt. Eine elektronische Steuereinheit 34 ist elektrisch mit einer Motorsteuerung 36, die Betriebsparameter des Verbrennungsmotors 24 kontrolliert und steuert, und mit einem fremdkraftbetätigten Aktor 38 verbunden, der die Kupplung 26 öffnen und schließen kann und beispielsweise elektrisch oder hydraulisch betätigt wird. Die elektronische Steuereinheit 34 ist auch mit einem Aktor 40 verbunden, mit dem die Übersetzung und somit die Ausgangsdrehzahl des Zapfwellengetriebes 28 auswählbar ist. Der Verbrennungsmotor 24 treibt über ein weiteres, nicht dargestelltes Getriebe auch die Räder 18 und ggf. 16 an.

Das Gerät 12 umfasst ein Fahrgestell 42, das sich über Räder 44 auf dem Erdboden abstützt und über eine Deichsel 46 mit einer Anhängekupplung 48 des Zugfahrzeugs 10 verbunden ist. Das Gerät 12 umfasst einen Gutaufnehmer 50, der während des Betriebes auf dem Feld liegendes Erntegut oberschlächtig fördert und einem Rotor 52 zuführt, der es in einen Ballenpressraum 54 fördert. Der Ballenpressraum 54 ist nach oben hin durch Pressmittel 56 in Form von Riemen und nach unten hin durch Walzen 58 und optional durch einen weiteren Riemen 60 umschlossen. Im rückwärtigen Bereich des Geräts 12 ist ein nach hinten und oben aufschwenkbares Gehäuseteil 62 vorgesehen, das zum Auswurf eines fertig gestellten Ballens um eine horizontal und quer zur Vorwärtsrichtung verlaufende Achse 64 an der Oberseite des Fahrgestells 42 angelenkt ist. Das Gehäuseteil 62 haltert Walzen 70, um welche die Pressmittel 56 umlaufen. Das Gehäuseteil 62 deckt die Pressmittel 56 nur zur Seite hin ab, aber nicht nach hinten. Das Gerät 12 hat jedoch seitliche, vordere und obere Abdeckungen, die zum Teil in den Figuren aus Gründen der Übersichtlichkeit nicht dargestellt sind. Die Walzen 58, Walzen zum Antrieb der Pressmittel 56 und des Riemens 60, der Rotor 52 und der Gutaufnehmer 50 stehen über eine Antriebswelle 66 und ein Getriebe 68 mit dem Zapfwellenausgang 30 des Zugfahrzeugs 10 in Antriebsverbindung. Derartige oder ähnliche Ballenpressen, bei denen die vorliegende Erfindung anwendbar ist, werden in der US 3 964 246 A, DE 102 50 425 A1, EP 1 512 320 A2 und der nachveröffentlichten DE 10 2009 002 585 A1 beschrieben, deren Offenbarungen durch Verweis mit in die vorliegenden Unterlagen aufgenommen werden.

An dem Gerät 12 ist im oberen, rückwärtigen Bereich ein Sensor 72 zugeordnet, der als Infrarotsensor oder Kamera mit Bildverarbeitungssystem ausgebildet ist und einen Gefahrenbereich 74 mit definierter Größe, der sich rückwärtig des Geräts 12 befindet, daraufhin überwacht, ob sich eine Person, ein Tier oder ein anderer Gegenstand hinter dem Gerät 12 befindet. Der Sensor 72 ist mit einer elektronischen Steuereinheit 76 verbunden, die über einen Bus 78 mit der elektronischen Steuereinheit 34 des Zugfahrzeugs 10 verbunden ist. Der Bus 78 kann gemäß der Norm ISO 11783 arbeiten. Die Motorsteuerung 36, die Aktoren 38 und 40 können durch zugeordnete Leitungen, wie in der Figur dargestellt, oder durch den Bus 70 mit der Steuereinheit 34 verbunden sein. Analog kann der Sensor 72 durch eine zugeordnete Leitung, wie in den Figuren gezeigt, oder durch den Bus 70 mit der Steuereinheit 68 verbunden werden.

Vorzugsweise dienen die elektronischen Steuereinheiten 34, 76 zur selbsttätigen Steuerung der Kombination aus Zugfahrzeug 10 und Gerät 12, z. B. zur selbsttätigen Geschwindigkeitssteuerung des Zugfahrzeugs 10 abhängig von der Rate aufgenommenen Ernteguts und der aktuellen Ballengröße, und zum selbsttätigen Anhalten und Wiederanfahren der Kombination nach Fertigstellung und Auswurf eines Ballens. Hierzu wird auf die Offenbarung der EP 1 813 146 A2 verwiesen, die durch Verweis mit in die vorliegenden Unterlagen aufgenommen wird.

Um zu verhindern, dass der Bediener, um eine Störung zu beheben, sich von der Funktion des Geräts zu überzeugen oder aus anderen Gründen die Kabine 20 verlässt und sich dem Gerät 12 nähert, während sich die Antriebswelle 64 dreht und die Walzen 58, Pressmittel 56, Riemen 60, der Rotor 52 und der Gutaufnehmer 50 rotieren bzw. sich bewegen und sich an bewegten Teilen des Geräts 12 verletzt, sind die Steuereinheiten 34, 68 derart programmiert, dass die Steuereinheit 76 des Geräts 12 eine Anweisung an die Steuereinheit 34 des Zugfahrzeugs 10 übersendet, den Aktor 38 in eine die Kupplung 26 trennende Stellung zu bringen, wenn der Sensor 72 der Steuereinheit 76 des Geräts 12 mitteilt, dass sich eine Person, ein Tier oder ein Hindernis im überwachten Gefahrenbereich 74 befindet. Dadurch erreicht man, dass die Zapfwelle 32 sofort angehalten wird, was auch zum Stopp der angetriebenen Elemente (Walzen 58, Pressmittel 56, Riemen 60, Rotor 52 und Gutaufnehmer 50) führt. Es wäre auch denkbar, in diesem Fall über die Steuereinheit 34 eine Zapfwellenbremse (nicht gezeigt) des Zugfahrzeugs 10 zu aktivieren. War die Zapfwelle 32 zum Zeitpunkt des Ansprechens des Sensors 72 noch nicht im Betrieb, verhindert die elektronische Steuereinheit 34 des Zugfahrzeugs 32, dass der Aktor 38 die Kupplung 26 schließt. Weiterhin wird dem Bediener ein Warnhinweis gegeben, sei es optisch über eine Anzeigeeinrichtung oder eine Sprachnachricht. Alternativ oder zusätzlich könnte die Steuereinheit 76 auch eine Kupplung (nicht gezeigt) im Getriebe 68 trennen, um die angetriebenen Elemente des Geräts 12 anzuhalten.

Die Steuereinheit 76 informiert die Steuereinheit 34, dass die Sicherheitsbedingungen wieder hergestellt sind, wenn der Sensor 72 der Steuereinheit 68 mitgeteilt hat, dass sich keine Person, Tier oder Hindernis mehr im Gefahrenbereich 74 befindet. Die Steuereinheit 34 weist den Aktor 38 aber daraufhin vorzugsweise erst dann an, die Kupplung 26 zu schließen, nachdem der Bediener eine Bestätigungstaste betätigt oder einen Zapfwellenschalter eingeschaltet hat.

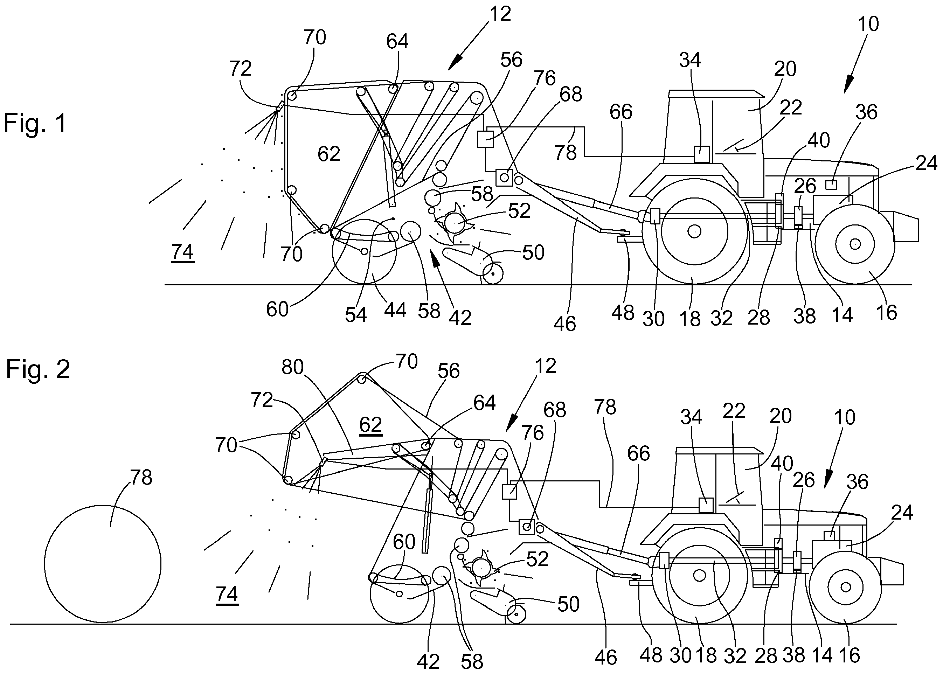

In der Figur 2 ist das Gerät 12 mit zum Auswurf eines fertig gestellten Ballens 78 angehobenem rückwärtigem Gehäuseteil 62 dargestellt. Der Sensor 72 ist nicht am Gehäuseteil 62 befestigt und schwenkt demnach nicht mit ihm nach oben, sondern ist über eine Strebe 80 mit dem Fahrgestell 42 starr verbunden. Er überwacht demnach weiterhin den Gefahrenbereich 74 rückwärtig des Geräts 12. Auf diese Weise wird weiterhin verhindert, dass die Steuerung 76 ein Absenken des rückwärtigen Gehäuseteils 62 veranlasst, solange der Sensor 72 nachweist, dass sich noch eine Person, Tier oder ein Hindernis, z. B. ein Ballen 78, im Gefahrenbereich 74 befindet. Analog wird der rückwärtige Gehäuseteil 62 nur dann zum Auswurf eines Ballens 78 angehoben, wenn der Sensor 72 kein Lebewesen innerhalb des Gefahrenbereichs 74 nachweist.

Die Größe des Gefahrenbereichs 74 ist derart bemessen, dass bei stehendem Gerät 12 und Zugfahrzeug 10 eine derart große Fläche abgedeckt wird, dass keine Person bewegte Teile an der Rückseite des Geräts 12 berühren kann, ohne dass eine selbsttätige Abschaltung der angetriebenen Elemente des Geräts 12 erfolgt. Bei fahrendem Gerät ist die Wahrscheinlichkeit eines Eingriffs in das Gerät 12 kleiner, sodass dann der Gefahrenbereich 74 verkleinert oder der Sensor 72 ganz abgeschaltet werden kann.

## Patentansprüche

1. Kombination aus einem landwirtschaftlichen Gerät (12) und einem Träger- oder Zugfahrzeug (10), wobei:
das Träger- oder Zugfahrzeug (10) eine mittels einer Kupplung (26) wahlweise ein- und ausschaltbare Zapfwelle (32) aufweist,
das Gerät (12) antreibbare Elemente (50, 52, 56, 58, 60) umfasst, die mit der Zapfwelle (32) verbindbar sind,
eine elektronische Steuereinheit (76) des Geräts (12) über einen Bus (78) mit einer elektronischen Steuereinheit (34) des Träger- oder Zugfahrzeugs (10) verbunden ist,
die elektronische Steuereinheit (34) des Träger- oder Zugfahrzeugs (10) mit einem fremdkraftbetätigten Aktor (38) zur Ein- und Ausschaltung der Kupplung (26) der Zapfwelle (32) in Verbindung steht,
die elektronische Steuereinheit (76) des Geräts (12) mit einem Sensor (72) zur Erfassung eines in einem Gefahrenbereich (74) des Geräts (12) anwesenden Lebewesens verbunden ist,
die elektronischen Steuereinheiten (76, 34) derart programmiert sind, dass die elektronische Steuereinheit (76) des Geräts (12) die elektronische Steuereinheit (34) des Träger- oder Zugfahrzeugs (10) im Fall einer Erfassung eines sich innerhalb des Gefahrenbereichs (74) befindlichen Lebewesens durch den Sensor (72) veranlasst, den Aktor (38) zur Trennung der Kupplung (26) der Zapfwelle (32) anzuweisen und/oder zu verhindern, dass der Aktor (38) die Kupplung (26) schließt, wenn ein Bediener einen Zapfwellenschalter einschaltet,
und die Größe des vom Sensor (72) überwachten Gefahrenbereichs (74) von der jeweiligen Geschwindigkeit der Kombination abhängt und bei höheren Geschwindigkeiten kleiner als bei niedrigen Geschwindigkeiten ist.

2. Kombination nach Anspruch 1, wobei das Gerät (12) eine mit Pressmitteln (56) ausgestattete Rundballenpresse ist, in deren rückwärtigem Bereich die Pressmittel (56) frei nach außen zugänglich sind, und dass der Sensor (72) dem rückwärtigen Bereich des Geräts (12) zugeordnet ist.

3. Kombination nach Anspruch 1 oder 2, wobei die elektronische Steuereinheit (34) des Träger- oder Zugfahrzeugs (10) betreibbar ist, den Aktor (38) nach dem Nachweis eines Lebewesens innerhalb des Gefahrenbereichs (74) erst dann anzuweisen, die Kupplung (26) wieder zu schließen, wenn die elektronische Steuereinheit (76) des Geräts (12) der elektronischen Steuereinheit (34) des Träger- oder Zugfahrzeugs (10) mitgeteilt hat, dass der Sensor (72) nachweist, dass sich kein Lebewesen mehr innerhalb des Gefahrenbereichs (74) befindet und ein Bediener eine Bestätigungstaste gedrückt oder einen Zapfwellenschalter eingeschaltet hat.

4. Kombination nach einem der Ansprüche 1 bis 3, wobei der Sensor (72) einen Infrarotsensor und/oder eine Kamera mit einem Bildverarbeitungssystem umfasst.

5. Kombination nach einem der Ansprüche 1 bis 4, wobei die elektronische Steuereinheit (76) des Geräts (12) eingerichtet ist, Fehlauslösungen des Sensors (72) durch von einer Ballenpresse ausgeworfene Ballen (78) zu vermeiden, indem die elektronische Steuereinheit (76) des Geräts (12) über das Auswerfen des Ballens (78) informiert wird und ein im zeitlichem Zusammenhang mit dem Auswerfen des Ballens (78) stehendes Ansprechen des Sensors (72) ignoriert.

6. Kombination nach einem der Ansprüche 1 bis 5, wobei die elektronische Steuereinheit (76) des Geräts (12) betreibbar ist, einen rückwärtigen Bereich (62) nur dann anzuheben oder abzusenken, wenn der Sensor (72) kein Lebewesen im Gefahrenbereich (74) nachweist.

## Claims

1. Combination of an agricultural device (12) and a carrier or towing vehicle (10), wherein:
the carrier or towing vehicle (10) has a power takeoff shaft (32) that can be engaged and disengaged as desired by means of a clutch (26),
the device (12) comprises driveable elements (50, 52, 56, 58, 60), which can be connected to the power takeoff shaft (32),
an electronic control unit (76) of the device (12) is connected via a bus (78) to an electronic control unit (34) of the carrier or towing vehicle (10),
the electronic control unit (34) of the carrier or towing vehicle (10) is connected to an externally power-operated actuator (38) to engage and disengage the clutch (26) of the power takeoff shaft (32),
the electronic control unit (76) of the device (12) is connected to a sensor (72) for detecting a living being present in a hazardous area (74) of the device (12),
the electronic control units (76, 34) are programmed in such a way that, in the event of the sensor (72) detecting a living being located within the hazardous area (74), the electronic control unit (76) of the device (12) causes the electronic control unit (34) of the carrier or towing vehicle (10) to notify the actuator (38) to disengage the clutch (26) of the power takeoff shaft (32) and/or to prevent the actuator (38) from engaging the clutch (26) when an operator switches on a power takeoff shaft switch,
and the size of the hazardous area (74) monitored by the sensor (72) depends on the respective speed of the combination and is smaller at higher speeds than at low speeds.

2. Combination according to Claim 1, wherein the device (12) is a roundbaler equipped with pressing means (56), in the rear area of which the pressing means (56) are freely accessible from outside, and in that the sensor (72) is assigned to the rear area of the device (12).

3. Combination according to Claim 1 or 2, wherein, after the detection of a living being within the hazardous area (74), the electronic control unit (34) of the carrier or towing vehicle (10) can be operated to notify the actuator (38) to engage the clutch (26) again only when the electronic control unit (76) of the device (12) has informed the electronic control unit (34) of the carrier or towing vehicle (10) that the sensor (72) verifies that no living being is still located within the hazardous area (74) and an operator has pressed an acknowledgement pushbutton or switched on a power takeoff shaft switch.

4. Combination according to one of Claims 1 to 3, wherein the sensor (72) comprises an infrared sensor and/or a camera with an image processing system.

5. Combination according to one of Claims 1 to 4, wherein the electronic control unit (76) of the device (12) is configured to avoid erroneous triggering of the sensor (72) by bales (78) ejected from a baling press, by the electronic control unit (76) of the device (12) being informed about the ejection of the bale (78) and disregarding a response of the sensor (72) that is related chronologically to the ejection of the bale (78).

6. Combination according to one of Claims 1 to 5, wherein the electronic control unit (76) of the device (12) can be operated to raise or lower a rear region (62) only when the sensor (72) verifies that there is no living being in the hazardous area (74).

## Revendications

1. Combinaison constituée d'un appareil agricole (12) et d'un véhicule porteur ou de traction (10), dans lequel :
le véhicule porteur ou de traction (10) comporte un arbre de prise de force (32) embrayable et débrayable de manière sélective au moyen d'un embrayage (26),
l'appareil (12) comprend des éléments pouvant être entraînés (50, 52, 56, 58, 60) qui peuvent être reliés à l'arbre de prise de force (32),
une unité de commande électronique (76) de l'appareil (12) est reliée par l'intermédiaire d'un bus (78) à une unité de commande électronique (34) du véhicule porteur ou de traction (10),
l'unité de commande électronique (34) du véhicule porteur ou de traction (10) est en liaison avec un actionneur (38) actionné par une force extérieure pour activer et désactiver l'embrayage (26) de l'arbre de prise de force (32),
l'unité de commande électronique (76) de l'appareil (12) est reliée à un capteur (72) destiné à détecter un être vivant présent dans une zone dangereuse (74) de l'appareil (12),
les unités de commande électroniques (76, 34) sont programmées de manière à ce que l'unité de commande électronique (76) de l'appareil (12) amène l'unité de commande électronique (34) du véhicule porteur ou de traction (10), dans le cas où un être vivant se trouvant à l'intérieur de la zone dangereuse (74) est détecté par le capteur (72), à ordonner à l' actionneur (38) et/ou à l'empêcher de débrayer l'embrayage (26) de l'arbre de prise de force (32), à ce que l'actionneur (38) ferme l'embrayage (26) lorsqu'un utilisateur active un commutateur d'arbre de prise de force et
lorsque la taille de la zone dangereuse (74) surveillée par le capteur (72) dépend de la vitesse respective de la combinaison et est plus faible pour les vitesses élevées que pour les faibles vitesses.

2. Combinaison selon la revendication 1, dans laquelle l'appareil (12) est une roto-presse équipée de moyens à presse (56), dans la zone arrière de laquelle les moyens à presse (56) sont librement accessibles vers l'extérieur, et dans lequel le capteur (72) est associé à la zone arrière de l'appareil (12).

3. Combinaison selon la revendication 1 ou 2, dans laquelle l'unité de commande électronique (34) du véhicule porteur ou de traction (10) ne peut être mise en fonctionnement pour ordonner à l'actionneur (38), en cas de preuve de la présence d'un être vivant à l'intérieur de la zone dangereuse (74), de refermer l'embrayage (26), que lorsque l'unité de commande électronique (76) de l'appareil (12) a informé l'unité de commande électronique (34) du véhicule porteur ou de traction (10) que le capteur (72) a prouvé que plus aucun être vivant ne se trouvait à l'intérieur de la zone dangereuse (74) et qu'un utilisateur a appuyé sur une touche d'actionnement ou a activé un commutateur d'arbre de prise de force.

4. Combinaison selon l'une quelconque des revendications 1 à 3, dans laquelle le capteur (72) comprend un capteur infrarouge et/ou une caméra comportant un système de traitement d'image.

5. Combinaison selon l'une quelconque des revendications 1 à 4, dans laquelle l'unité de commande électronique (76) de l'appareil (12) est conçue pour éviter des déclenchements intempestifs du capteur (72) par des balles (78) éjectées par une presse à balles, en informant l'unité de commande électronique (76) de l'appareil (12) de l'éjection de la balle (78) et en ignorant une réponse du capteur (72) chronologiquement liée à l'éjection de la balle (78).

6. Combinaison selon l'une quelconque des revendications 1 à 5, dans laquelle l'unité de commande électronique (76) de l'appareil (12) peut être mise en fonctionnement pour ne soulever ou abaisser une zone arrière (62) que lorsque le capteur (72) prouve qu'aucun être vivant n'est présent dans la zone dangereuse (74).
